# EUROPEAN PATENT APPLICATION

(11) **EP 1 245 440 A1**
(43) Date of publication of application: **02.10.2002**
(21) Application number: 01830219.0
(22) Date of filing: 29.03.2001
(51) Int. Cl.: B60P 3/14

(54) **Equipped booth able to be mounted on vehicles**

(71) Applicant: Mast S.p.A., 36100 Vincenza (IT)
(72) Inventor: Alemagna, Massimo, 80100 Napoli (IT)
(74) Representative: Lanzoni, Luciano

(57) **Abstract**

An equipped booth mountable on vehicles (2) having a volume (9) for housing work equipment, and comprising a plurality of first modular walls (10) mounted internally to the volume (9) and subdividing said volume (9) into a plurality of main compartments (11), (12), (13), (14), (15). A plurality of access doors (16) positioned on lateral walls (4), (5), (6), (7) of the booth (1) allow an operator to access the main compartments (11), (12), (13), (14), (15) from outside the booth (1) itself. The booth further comprises a first tank (18), for containing clean water and a second tank (19), for collecting waste water, inserted in the volume (9). At least one of the main compartments (11), (12), (13), (14), (15) comprises a tap (38) connected to the first tank (18) and a sink (29) operatively associated with the tap (38) and connected to the second tank (19). Moreover at least one of said main compartments (11), (12), (13), (14), (15) is constituted by a plurality of second compartments (28) for housing work equipment. Additionally, at least one of the main compartments (11), (12), (13), (14), (15) comprises at least a foot board (44) having a main direction of development, and movable from a non operative position in which it is inserted inside the volume (9), to an operative position in which it projects from the volume (9) connecting the related main compartment (11), (12), (13), (14), (15) to the ground surrounding the booth (1).

## Description

The present invention relates to an equipped booth able to be mounted on vehicles of the type comprising the characteristics expressed in the preamble to claim 1.

The booth of the present invention is preferably destined to be used for environmental cleaning and sanitation operations.

However, it is suitable for use also in sectors such as gardening, disinfection and pest control, and small maintenance operations (by plumbers, electricians, ...).

The booth of the present invention can be mounted on any type of vehicle, both motorised, such as motor vehicles or waterborne vessels, and non motorised.

For the sake of descriptive simplicity, hereinafter reference shall be made to booths mounted on motor vehicles, without limitation to their possible application to different vehicles as well.

In the aforementioned fields of activity, two types of motor vehicles are currently used to transport the required equipment.

A first type, disclosed for instance in Japanese patent no. 10059055, provides for the use of motor vehicles fitted, in the rear part, with an open body, in which the different necessary equipment items are positioned.

This type of vehicle, however, has several important drawbacks.

In the first place, the entire content of the body is exposed to the elements and can therefore become wet, overheat if exposed to the sun or otherwise be ruined.

In the second place, in addition to the elements, the material accumulated in the tank is also exposed to possible thefts, especially if it is left in the tank even when the operator moves away from the vehicle to perform his duties.

Moreover, it is inconvenient to load and offload the equipment from the tank, when such equipment is, for instance, heavy or bulky such as vacuum cleaners, polishing machines, or trolleys of the type used for cleaning.

The second known type of vehicles provides for a closed body, equipped with one or two doors to allow an operator to access its interior, to be placed behind the driver's cab.

Inside the body, along its walls, are traditionally provided a plurality of brackets and shelves are provided, whereon the smaller equipment items are housed.

As regards, instead, the larger equipment items, they are loaded inside the tank side by side or pell-mell.

Although the second known type of vehicles is the most commonly used one, it is not free from drawbacks.

In the first place, this second type of vehicles allows to exploit the space in the body only partially, since a minimum space must always be left free to allow the operator to access the body and move about within it.

In the second place, operators who use this type of vehicle are prone, most of the time, to pile the different equipment items on top of each other in a wholly random fashion, with the consequence that oftentimes something gets lost.

Additionally, loading and offloading the different tools into and out of the body can require considerable effort by the operator, especially for the heavier equipment items.

Both types of vehicles described above, moreover, allow to use only commercial vehicles, adapting them as well as possible to the specific requirements of each sector of employment.

In this situation the technical task constituting the basis for the present invention is to provide an equipped booth able to be mounted on vehicle which overcomes the aforementioned drawbacks.

In particular, a technical task of the present invention is to provide an equipped booth that can be mounted indifferently on any type of vehicle.

A further technical task of the present invention is to provide an equipped booth that allows the best exploitation of all available space.

Yet another technical task of the present invention is to provide an equipped booth that guarantees the simplicity of the operations of loading and offloading the material contained therein.

The specified technical task and the indicated aims are substantially achieved by an equipped booth able to be mounted on vehicles, as described in the claims that follow.

Further features and advantages of the present invention shall become more readily apparent from the detailed description of a preferred, but not exclusive, embodiment of an equipped booth able to be mounted on vehicles, illustrated in the accompanying drawings, in which:
- Figure 1 shows a right-side lateral view of an equipped booth according to the present invention mounted on a motor vehicle, with the access doors closed;
- Figure 2 shows a left-side lateral view of the booth of Figure 1;
- Figure 3 shows a rear view of the booth of Figure 1;
- Figure 4 shows a perspective view of the right side of a booth according to the present invention, with the access doors open;
- Figure 5 shows a perspective view of the booth of Figure 4 with foot boards in an operative position;
- Figure 6 shows a perspective view of a detail of the booth of Figure **4**;
- Figure 7 shows a perspective view of another detail of the booth of Figure **4**;
- Figure 8 shows a perspective view of a detail of the booth of Figure 2 with the access door open;
- Figure 9 shows a perspective view of another detail of the booth of Figure 2 with the access door open;
- Figure 10 shows a perspective view of the rear side of a booth according to the present invention, with the access door open and a sink in operative condition;
- Figure 11 shows a perspective view of a detail of the booth of Figure 10 with the sink in non operative condition; and
- Figure 12 shows a perspective view of the rear side of the booth of Figure 10 with a foot board in operative position.

With reference to the aforementioned figures, the reference number 1 globally indicates an equipped booth able to be mounted on vehicles 2 according to the present invention.

The booth 1 shown in the accompanying figures is destined to be used for cleaning operations, and it is equipped with accessories for that purpose (as regards specific supports, as shall become more readily apparent farther on). If instead it is to be destined to other purposes, other accessories can also be provided.

The booth 1 is delimited by a substantially rectangular lower base plane 3, by four lateral walls 4, 5, 6, 7 developing upwards from the edges of said base plane and by a covering plane 8 situated above said lateral walls. In particular, a front lateral wall 4, a rear lateral wall 5, a right lateral wall 6 and a left lateral wall 7 can be distinguished.

The base plane can be fastened to a flatbed of a vehicle 2 by means of removable fastening means, such as screws.

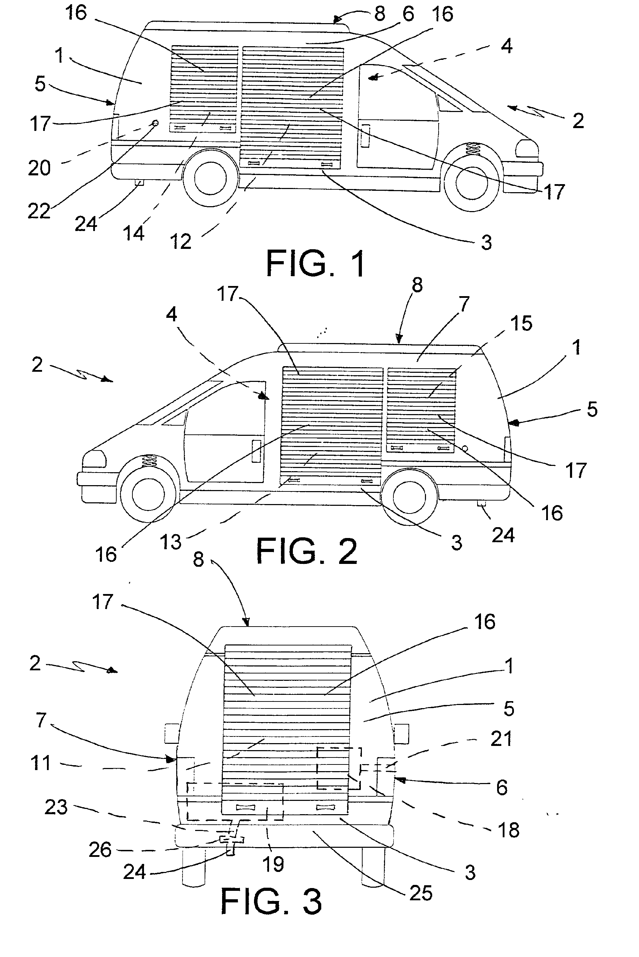

In particular, the base plane 3 can be fastened to the rear flatbed of a motor vehicle 2 (Figures 1-3) in such a way that the front lateral wall 4 is oriented towards the front side of the motor vehicle 2 and is adjacent to the driver's cab.

The planes 2, 8 and the lateral walls 4, 5, 6, 7 define a volume 9 for housing work equipment.

The booth 1 comprises a plurality of first modular walls 10 mounted internally to the volume 9 which subdivided the volume 9 itself into a plurality of main compartments 11, 12, 13, 14, 15.

In the illustrated embodiment, for example, the volume 9 is subdivided into five main compartments: a rear main compartment 11, a front right main compartment 12, a front left main compartment 13, an intermediate right main compartment 14 and an intermediate left main compartment 15.

Access to each compartment 11, 12, 13, 14, 15 is guaranteed by at least an access door 16, obtained on a lateral wall 4, 5, 6, 7 in correspondence with the related main compartment 11, 12, 13, 14, 15.

The access doors 16 allow to access the contents of the main compartments 11, 12, 13, 14, 15 remaining outside the booth 1.

The access door 16 to the rear main compartment 11 is situated on the rear lateral wall 5, whilst the access doors 16 to the front right compartment and to the intermediate right compartment are situated on the right lateral wall 6, and the access doors 16 to the front left main compartment 13 and to the intermediate left main compartment 15 are situated on the left lateral wall 7.

The access doors 16 are constituted each by a roller shutter 17 able to slide substantially vertically along the related lateral wall 4, 5, 6, 7.

In the inner volume 9, moreover, are provided also a first tank 18, for containing clean water, and a second tank 19, for collecting waste water.

On the right lateral wall 6 is further obtained a hole 20 connected, by an inlet conduit 21, to the first tank 18 to allow an operator to pour water into the tank. Advantageously, said hole 20 is closed by a removable stopper.

To the second tank 19 is then connected an outlet conduit 23, an end 24 whereof projects from the internal volume 9 of the booth 1 in correspondence with a lower area 25 of the booth 1 itself, to allow the emptying of the second tank 19.

This end 24 of the outlet conduit 23 is provided with shut-off means 26 for opening or closing at will the outflow from the second tank 19.

Each main compartment 11, 12, 13, 14, 15 is subdivided, by a plurality of second internal modular walls 27, into a plurality of second compartments 28 for housing the different work equipment items.

At least one of the main compartments 11, 12, 13, 14, 15, in the illustrated embodiment the rear compartment 11, internally presents a sink 29 connected to the first and to the second tank 18, 19.

In the illustrated embodiment the main rear compartment 11 is subdivided by the second walls 27 into three second compartments, a greater lower compartment 30, in which the sink 29 is located, and two smaller upper compartments 31.

Preferably, the sink 29 is constituted by a support 31 fastened to the inner wall 33 of the second lower compartment 30 and by a tray 34 movable from an operative condition in which it is attached to the support 32 to be used, to a transport condition in which it is detached from the support 32 and is slidingly inserted in two support guides 35 fastened underneath the two second smaller compartments 31.

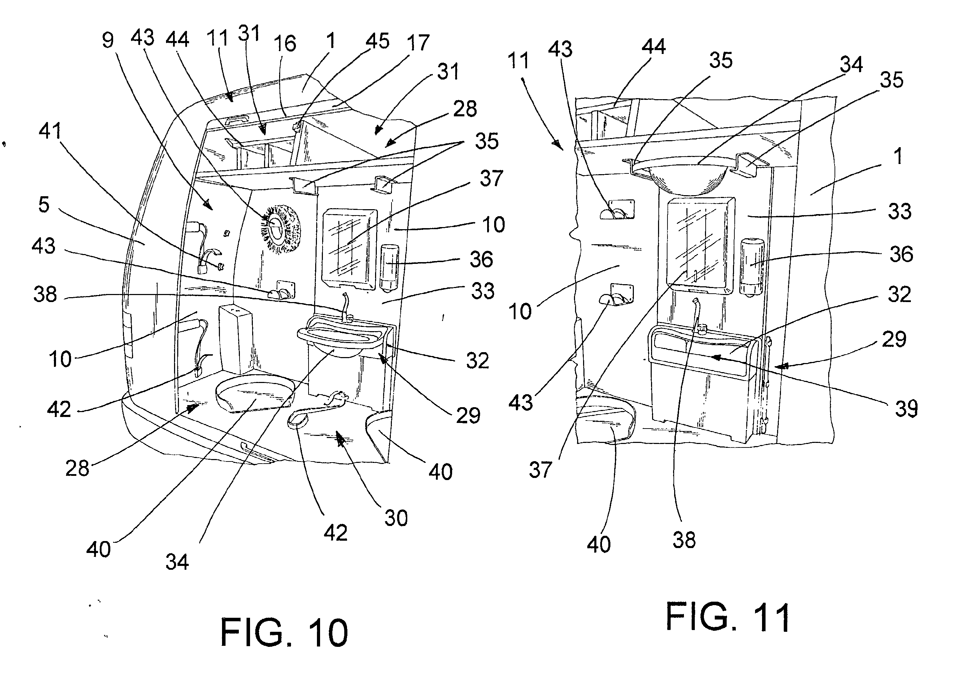

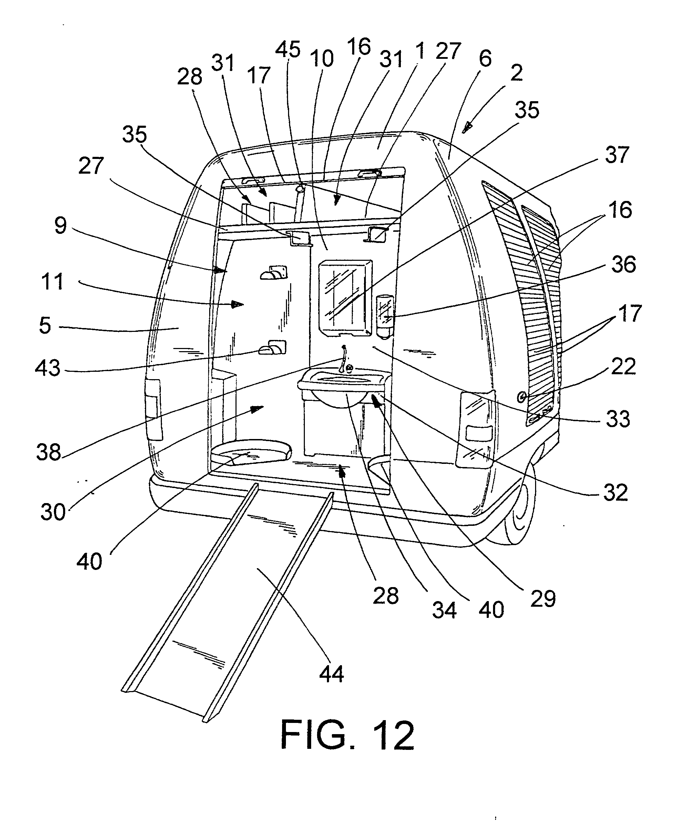

As shown in Figures 10-12, the main rear compartment 11 further comprises a soap dispenser 36 and a dispenser for paper towels 37, fastened to the inner wall 33 of the main rear compartment 11 itself in proximity to the sink 29.

On the support 32 of the sink 29 is mounted a tap 38 connected to the first tank 18 to draw, by means of a pump (not shown herein), the necessary water.

Moreover on the support 32 is obtained a drain 39 for the sink 29, connected to the second tank 19.

The rear main compartment 11 further comprises at least a housing 40 for receiving the base of a single-brush scrubber, and a plurality of hooks 41 and securing belts 42 for supporting equipment items.

In particular, it comprises two housings 40 for receiving the base of single-brush scrubbers positioned on the base of the second lower compartment 30, and at least two securing belts 42 for locking the handle of the single-brush scrubbers. It also comprises a plurality of supports for discoidal replacement brushes 43 for the single-brush scrubbers, located on the same wall whereon the sink 29 is located.

The rear main compartment 11 further comprises at least a foot board 44 having one main direction of development, and movable from a non operative position in which it is slidingly inserted inside one of the second smaller compartments 31, to an operative position in which it is extracted from the second smaller compartment 31 and it is attached to the access door 16 in correspondence with the base of the second lower compartment 30 and projects from the volume 9 to bear down on the floor surrounding the booth 1.

Also provided are means 45 for holding the foot board 44 in the non operative position.

The disposition of all the other main compartments 11, 12, 13, 14, 15 being immediately understandable from the accompanying drawings, the major features of the individual main compartments 11, 12, 13, 14, 15 shall now be described.

All the elements which, in the illustrated embodiment, are provided in one of the main compartments 11, 12, 13, 14, 15 can, at will, be positioned in another main compartment 11, 12, 13, 14, 15, without thereby departing from the scope of the present invention.

The front right main compartment 12 comprises in its interior two larger lower second compartments 46 for housing trolleys or apparatuses for cleaning, and two smaller lower second compartments 47 located below the larger compartments 46 for housing two foot boards 44.

Such foot boards 44 comprise each a non active portion 48 and an active portion 49 hinged to each other according to an axis of rotation perpendicular to the main direction of development of the foot board 44 itself.

In this way the active portion 49 is movable from a first position, in which it is co-planar with the non active portion 48, to a second position, in which it is inclined relative to the non active portion 48.

The foot board 44 are also movable from a non operative position in which they are slidingly inserted in said second smaller lower housing compartments 47 to an operative position in which said non active portion 48 is inserted at least in part in the related second housing compartment 47 and the active portion 49 projects from said second compartment 47 and is in the second position.

In a second lower compartment 50 of the front left main compartment 13 is removably inserted a drawer set 51 for containing small items.

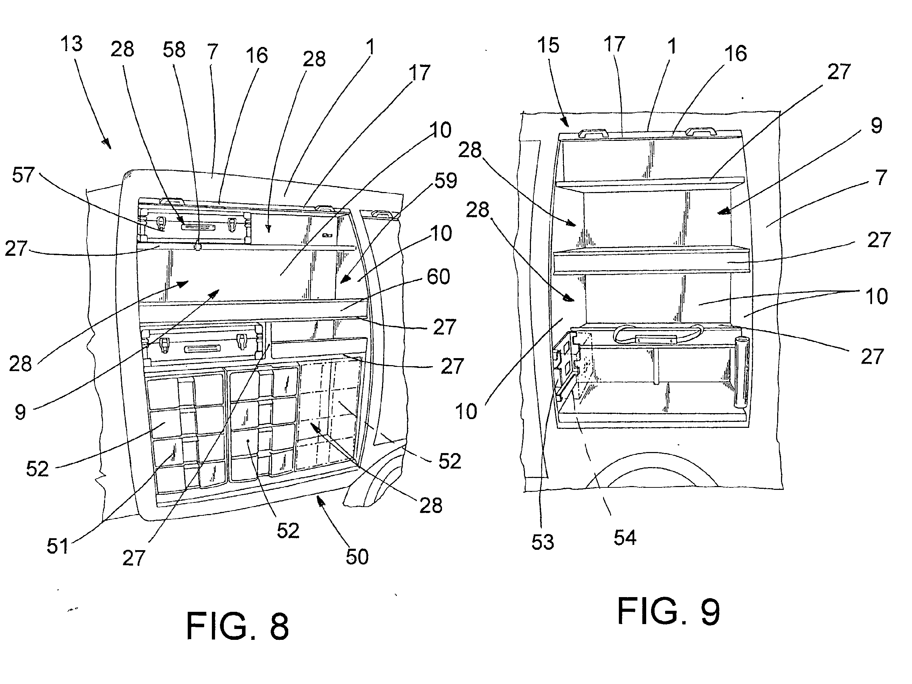

This drawer set 51 comprises three parts 52, two of which are illustrated in Figure 8.

In the intermediate left main compartment 15 is fastened a vertical case holder 53, into which a case 54, for instance for a first aid kit, can be removably inserted.

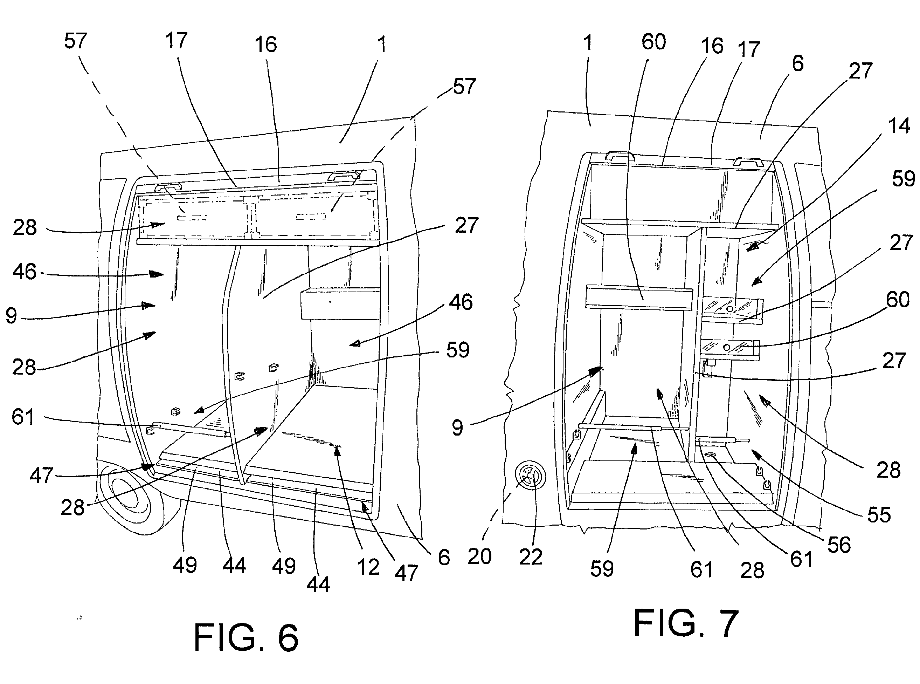

The intermediate right main compartment 14 comprises a second lower compartment 55 for containing wet and/or dirty objects, on whose base is obtained at least a drain 56 connected to the second tank 19, to allow the liquids to drain (Figure 7).

Many of the inner walls of the main compartments 11, 12, 13, 14, 15 are further provided with a plurality of hooks 41 and/or securing belts 42 for supporting equipment items, such as telescoping bars, pipes, glass washers, and others besides.

In the two front main compartments 12, 13 are obtained second compartments 28 able to house each a containment case 57. The second compartments 28 are also provided with movable locking means 58 for locking the cases 57 in the related second compartment 28, and constituted for instance by knobs able to be snap-rotated (Figure 8).

Many of the second compartments 28 are further provided with means 59 for preventing the exit of material contained therein.

Such prevention means 59 can be constituted by a bezel 60 fastened either solidly or removably in correspondence with the entry section of the second compartment 28 (Figure 7), or by a removable locking bar 61 (Figures 6 and 7).

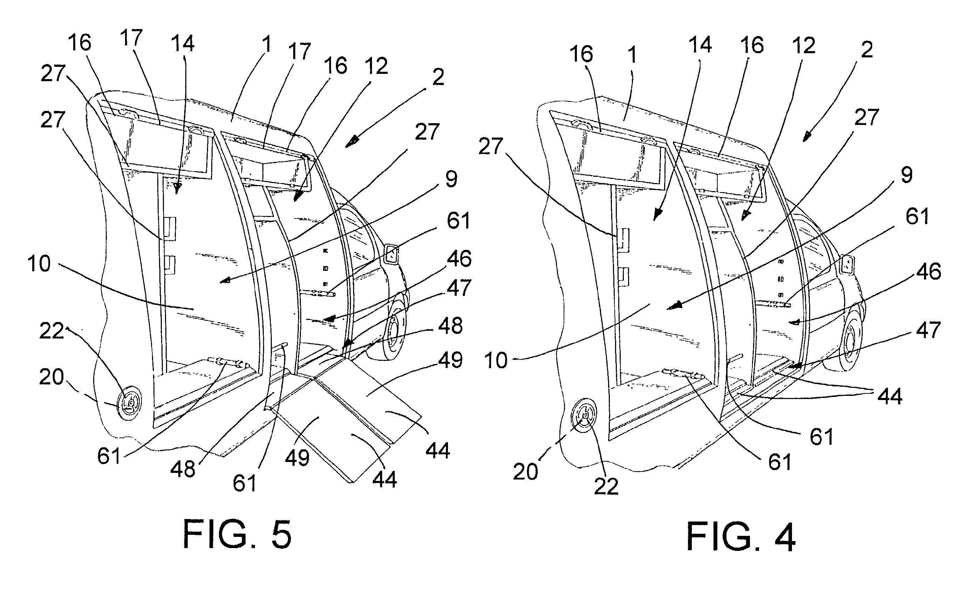

Such locking bars 61 are of the telescopic type with spring or locking screw, and are movable from a position of engagement in which they partially obstruct the entry to the related second compartment 28 (Figures 6 and 7), to a rest position in which they do not obstruct the entry to the related second compartment 28 and are held by appropriate hooks 41 fastened internally to the related main compartment 11, 12, 13, 14, 15 (Figures 4 and 5).

From the functional standpoint the booth of the present invention can be used in very many different ways, depending on requirements.

Purely by way of example, a use of the booth 1 for containing the necessities to conduct cleaning operations is described below.

In the rear main compartment 11, with the sink 29 in the non operative position, two single-brush scrubbers can be positioned in the respective housings, as well as, between the two single-brush scrubbers, an additional tool, such as a carpet cleaner. A belt (Figure 10) allows to secure the carpet cleaner as well.

In the upper secondary compartment of the rear main compartment 11, an articulated ladder and possibly bars or pipes can also be housed.

In the front right main compartment 12 can also be housed, provided the dimensions of the booth 1 allow it, a carpet washer, a vacuum cleaner and/or a liquid aspirator, an equipped trolley of the type used for cleaning operations, and a trolley for washing floors. Once inserted, the equipment items are locked with the prevention means 58 provided for this purpose.

All accessories of the different equipment items can advantageously be contained in the cases 57, or hung to the walls by means of the hooks 41.

Any dirty tools or wet rags are instead stowed in the second lower compartment of the intermediate right main compartment 14.

The drawer set 51 of the front left main compartment 13 allows an orderly subdivision of all smaller accessories, such as rags, sponges, cloths, any spares, etcetera.

In all other compartments present are housed all other products necessary in cleaning operations (chemical products, detergents, waste bags, and others).

The present invention achieves important advantages.

In particular, the equipped booth 1 of the present invention can be mounted on any type of vehicle 2.

Moreover said booth 1 allows to exploit all internal space for containing objects, allowing an easy access to each point thanks to its innovative interior configuration.

Additionally the equipped booth 1 guarantees and extreme simplicity for the loading and offloading of the material contained therein, in particular of the heavier material.

It should also be noted that the present invention is relatively easy to use and that also the cost connected to embodying the invention is not very high.

The invention thus conceived can be subject to numerous modifications and variations, without thereby departing from the scope of the inventive concept that characterises it.

All components can be replaced with other technically equivalent elements and in practice all materials employed, as well as the shapes and sizes of the various components, can be any depending on requirements.

## Claims

1. Equipped booth able to be mounted on vehicles having a lower base plane (3), lateral walls (4), (5), (6), (7) developing upwards from the edges of said base plane (3) and a covering plane (8) located above said lateral walls (4), (5), (6), (7), said planes (3), (8), and said walls (4), (5), (6), (7) defining a volume (9) for housing work equipment, **characterised in that** it comprises:
a plurality of first modular walls (10) mounted internally to said volume (9) and
subdividing said volume (9) into a plurality of main compartments (11), (12), (13), (14), (15);
a plurality of access doors (16), each access door (16) being positioned on a lateral wall (4), (5), (6), (7) in correspondence with one of said main compartments (11), (12), (13), (14), (15) to allow an operator to access said main compartments (11), (12), (13), (14), (15) from outside the booth (1);
a first tank (18), for containing clean water, inserted in said volume (9);
an inlet conduit (21) connected between the first tank (18) and a hole (20) obtained in one of said lateral walls (4), (5), (6), (7), to allow an operator to pour water into the first tank (18);
a second tank (19), for connecting waste water, inserted in said volume (9);
a drain conduit (23) connected to said second tank (19) and projecting from said volume (9) in correspondence with a lower area (24) of the booth (1);
at least one of said main compartments (11), (12), (13), (14), (15) comprising a tap (3) connected to said first tank (18) and a sink (29) operatively associated with the tap (38) and connected to the second tank (19);
at least one of said main compartments (11), (12), (13), (14), (15) comprising a plurality of second modular walls (27) defining a plurality of second compartments (28) for housing work equipment;
at least one of said main compartments (11), (12), (13), (14), (15) comprising at least a foot board (44) having a main direction of development, and movable from a non operative position in which it is inserted within said volume (9), to an operative position in which it projects from said volume (9) connecting the related main compartment (11), (12), (13), (14), (15) to the ground surrounding the booth (1).

2. A booth as claimed in claim 1 **characterised in that** said main compartment provided with said foot board (44), further comprises a second compartment (31), (47) for housing said foot board (44), said foot board (44) in said non operative position being slidingly engaged in said second housing compartment (31), (47).

3. A booth as claimed in claim 2 **characterised in that** said foot board (44) comprises a non active portion (48) and an active portion (49) hinged to said non active portion (48) according to an axis of rotation that is perpendicular to the main direction of development of the foot board (44), and movable from a first position, in which it is co-planar to said non active portion (48), to a second position, in which it is inclined relative to said non active portion (48), and **in that**, when the foot board (44) is in the non operative position, said active portion (49) is in the first position, and when the foot board (44) is in the operative position, said non active portion (48) is inserted in said housing compartment (47) and said active portion (49) projects from said volume (9).

4. A booth as claimed in claim 1 **characterised in that** said access doors (16) comprise each a roller shutter (17) able to slide along the related lateral wall (4), (5), (6), (7).

5. A booth as claimed in claim 1 **characterised in that** said sink (29) comprises a support (32) fastened inside the related main compartment (11), (12), (13), (14), (15) and connected to the second tank (19), and a tray (34) movable from an operative condition in which it is attached to the support (32) and it is usable, to a transport condition in which it is not usable.

6. A booth as claimed in claim 5 **characterised in that** said main compartment (11), (12), (13), (14), (15) provided with the sink (29) further comprises two support guides (35) for holding said tray (34) in said transport condition.

7. A booth as claimed in any of the previous claims, **characterised in that** said main compartment (11), (12), (13), (14), (15) provided with the sink (29) further comprises a soap dispenser (36) and a paper towel dispenser (37).

8. Booth as claimed in any of the previous claims **characterised in that** at least one of said main compartments (11), (12), (13), (14), (15) comprises a plurality of hooks (41) and at least a securing belt (42) for supporting equipment items.

9. Booth as claimed in any of the previous claims **characterised in that** at least one of said main compartments (11), (12), (13), (14), (15) comprises at least a housing (40) for receiving the base of a single-brush scrubber, at least a securing belt (42) for locking the handle of said single-brush scrubber, and a plurality of supports for brushes (43).

10. A booth as claimed in any of the previous claims **characterised in that** it comprises at least a containment case (57) removably housed in one of said second compartments (28) and movable locking means (58) for locking said case (57) in the related second compartment (28).

11. A booth as claimed in any of the previous claims **characterised in that** at least one of said second compartments (28) comprises means (58) for preventing material from exiting said second compartment.

12. A booth as claimed in claim 11 **characterised in that** said preventing means (59) comprise at least a locking bar (61) movable from an engagement position in which it partially obstruct the entry to the related second compartment (28), to a rest position in which it does not obstruct the entry to the related second compartment (28).

13. A booth as claimed in claim 11 **characterised in that** said preventing means (59) comprise at least a bezel (60) removably fastened in correspondence with the entry of the related second compartment (28).

14. Booth as claimed in any of the previous claims **characterised in that** it further comprises at least a drawer set (51) removably inserted in one of said second compartments (28).

15. Booth as claimed in any of the previous claims **characterised in that** it further comprises a case (54) and a case holder (53) fastened internally to one of said main compartments (11), (12), (13), (14), (15), said case (54) being removably supported by said case holder (53).

16. Booth as claimed in any of the previous claims **characterised in that** at least one of said main compartments (11), (12), (13), (14), (15) further comprises, in correspondence with its own lower area, at least a drain (56) operatively connected to said second tank (19), to allow liquids to drain from the compartment.

17. Booth as claimed in any of the previous claims presenting a front lateral wall (4), a rear lateral wall (5), a right lateral wall (6) and a left lateral wall (7), **characterised in that** said volume (9) is subdivided into five main compartments (11), (12), (13), (14), (15), a rear main compartment (11), a front right main compartment (12), a front left main compartment (13), an intermediate right main compartment (14) and an intermediate left main compartment (15), and **in that** it comprises an access door (16) for each main compartment (11), (12), (13), (14), (15), the access door (16) to the rear main compartment (11) being located on the rear lateral wall (5), the access doors (16) to the front right main compartment (12) and to the intermediate right main compartment (13) being located on the right lateral wall (6), the access doors (16) to the front left main compartment (13) and to the intermediate left main compartment (15) being located on the left lateral wall (7), said rear main compartment (11) comprising said sink (29) and said foot board (44), said front right main compartment (12) comprising at least two second compartments (28) and two of said foot boards (44), each to allow access to one of said second compartments (28).

18. A booth as claimed in any of the previous claims, **characterised in that** it is constituted by a prefabricated structure removably fastenable to ground or waterborne vehicles.
